# EUROPEAN PATENT SPECIFICATION

(11) **EP 4 462 571 B1**
(45) Date of publication and mention of the grant of the patent: **06.05.2026**
(21) Application number: 23901074.7
(22) Date of filing: 05.12.2023
(51) Int. Cl.: H01M 50/269, H01M 50/267, H01M 50/247, H01M 50/264, H01M 50/209, H01H 50/04

(54) **RELAY HAVING POSITION-ADJUSTABLE FASTENING MEMBER**
RELAIS MIT POSITIONSEINSTELLBAREM BEFESTIGUNGSELEMENT
RELAIS AYANT UN ÉLÉMENT DE FIXATION À POSITION RÉGLABLE

(30) Priority: 09.12.2022 KR 20220171778
(43) Date of publication of application: 13.11.2024
(73) Proprietor: LG Energy Solution, Ltd., Seoul 07335 (KR)
(72) Inventor: CHOI, Yeon Soon, Daejeon 34122 (KR)
(74) Representative: Plasseraud IP
(86) International application number: PCT/KR2023/019931
(87) International publication number: WO 2024/123056

(56) References cited:
- CN-A- 111 653 456
- CN-A- 115 036 170
- CN-U- 217 241 186
- KR-A- 20150 129 991
- KR-A- 20150 129 991
- KR-U- 20170 003 784
- KR-Y1- 200 421 687
- KR-Y1- 200 421 687
- US-A- 6 116 558

## Description

### [Technical Field]

The present invention relates to a relay having a position-adjustable fastening member. More particularly, the present invention relates to a relay having a position-adjustable fastening member configured such that the position of the fastening member of the relay is adjustable, whereby it is possible to flexibly utilize a mounting space, and a battery module/battery pack including the same.

### [Background Art]

Secondary batteries are used in a variety of devices, from mobile devices to electric vehicles. A plurality of battery cells is disposed in a small-sized device, whereas a battery module including a plurality of battery cells electrically connected to each other or a battery pack including a plurality of battery modules is used in a vehicle, etc.

A battery module/battery pack is equipped with at least one relay, and the position and shape of a relay fastening member are changed depending on the size and shape of the battery module/battery pack. As a result, manufacturing cost increases and compatibility is lowered.

FIG. 1 is a perspective view showing a relay according to Patent Document 1. The relay shown in FIG. 1 includes a relay housing 10, a connection member 20 electrically connected to a battery module, and a fixing portion 30 configured to allow the relay to be fixed to a case of the battery module therethrough.

The relay according to Patent Document 1 may be fixed to case of the battery module by inserting a bolt through a through-hole of the fixing portion 30 formed at the relay housing 10.

In a relay according to a related art, the position and shape for fixing the relay are fixed, as in Patent Document 1. When the shape of a case of a battery module/battery pack in which the relay is mounted or the position at which the relay is mounted is changed, it is necessary to reproduce a product with the position of the fixing portion 30 adjusted accordingly, which increases the manufacturing cost and manufacturing time, and the production and management of parts are not efficient due to low compatibility with other parts.

### (Prior Art Document)

(Patent Document 1) Korean Patent Application Publication No. 2015-0129991. KR200421687 Y1 relates to a moving structure for a vehicle fuse box. US6116558 A relates to dummy terminal mounting mechanisms.

### [Disclosure]

### [Technical Problem]

The present invention has been made in view of the above problems, and it is an object of the present invention to provide a relay having a position-adjustable fastening member configured such that the position of the fastening member is more freely adjustable, whereby it is possible to facilitate the mounting of the relay even though the shape of a battery module/battery pack case is deformed or the mounting position of the relay is changed.

### [Technical Solution]

In order to accomplish the above object, the present invention provides a relay according to claim 1.

The guide rail (1200) may include a vertical portion (1210) extending from the outer surface of the relay housing (1100) in a vertical direction and a horizontal portion (1220) extending from the vertical portion (1210) in a direction parallel to the outer surface, wherein the horizontal portion (1220) may be provided with a first incision portion (1221).

The first incision portion (1221) may have at least one of a concave-convex pattern shape, a wavy shape, and a straight shape. When the first incision portion has the straight shape, the horizontal portion (1220) may be provided in an inner surface thereof with a non-penetrating fixing recess having a predetermined depth formed in a concave-convex pattern shape or a wavy shape.

A first protrusion (1321) protruding by a predetermined length may be formed on a side surface of the second flat portion (1320).

A second elastomer (1350) configured to connect the fastening portion (1340) and the second flat portion (1320) to each other may be located between the fastening portion (1340) and the second flat portion (1320). The relay may further include a columnar extension wall (1323) configured to connect the fastening portion (1340) and the second flat portion (1320) to each other, and the second elastomer may be disposed outside or in the columnar extension wall (1323).

At least one second protrusion (1323') may be formed on an outer surface of an upper end of the columnar extension wall (1323).

The second flat portion (1320) may be provided in the center thereof with an indented hole (1322) having a predetermined depth, and an extension wall (1323) extending by a predetermined height may be formed along an edge of the indented hole (1322).

The second flat portion (2320) may be provided with a second incision portion (2324) partially incised inward from an edge thereof, the relay may further include a third elastomer (23260) which may be located in the second incision portion (2324), and a fastener (2370) connected to the third elastomer which may be located adjacent to an edge of the second incision portion (2324).

### [Advantageous Effects]

As is apparent from the above description, the present invention has the advantage that a fastening member is movable along a guide rail, whereby it is possible to facilitate mounting and fixing of a relay.

In addition, the present invention also has the advantage that the fastening member is rotatable, whereby the fastening member may be more easily mounted and seated on a seating portion of a case on which the fastening member is mounted.

### [Description of Drawings]

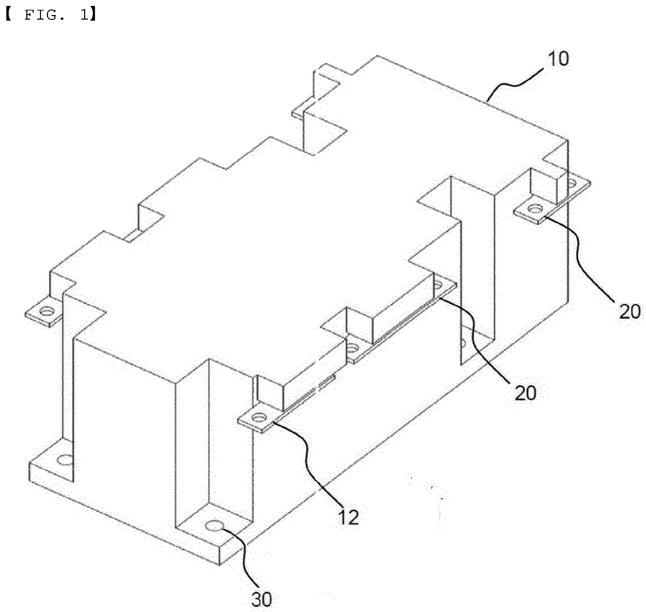

FIG. 1 is a perspective view showing a relay assembly according to a related art.
FIG. 2 is a perspective view showing a relay according to a first embodiment of the present invention.
FIG. 3 is an enlarged perspective view of a guide rail according to the first embodiment of the present invention.
FIG. 4 is a perspective view showing a fastening member according to the first embodiment of the present invention.
FIG. 5 is an exploded perspective view showing the fastening member according to the first embodiment of the present invention.
FIG. 6 is an exploded perspective view showing a fastening member according to a second embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a relay having a position-adjustable fastening member according to the present invention will be described with reference to the accompanying drawings.

What is referred to as a relay in the present invention may be a relay part itself or a relay assembly including a relay. Specifically, a relay itself or a relay assembly in which a relay and related components are received in a separate case or housing may be used as a relay that is mountable on a battery module/battery pack.

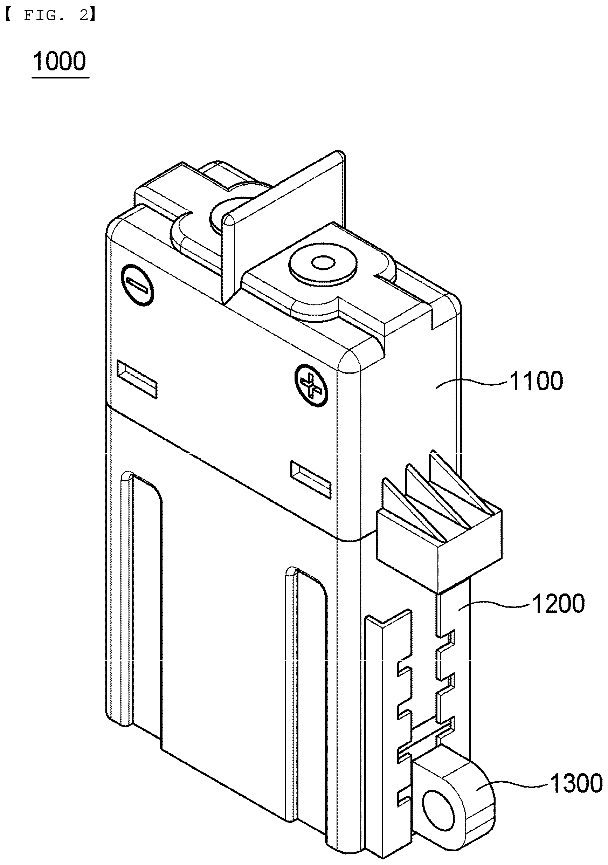

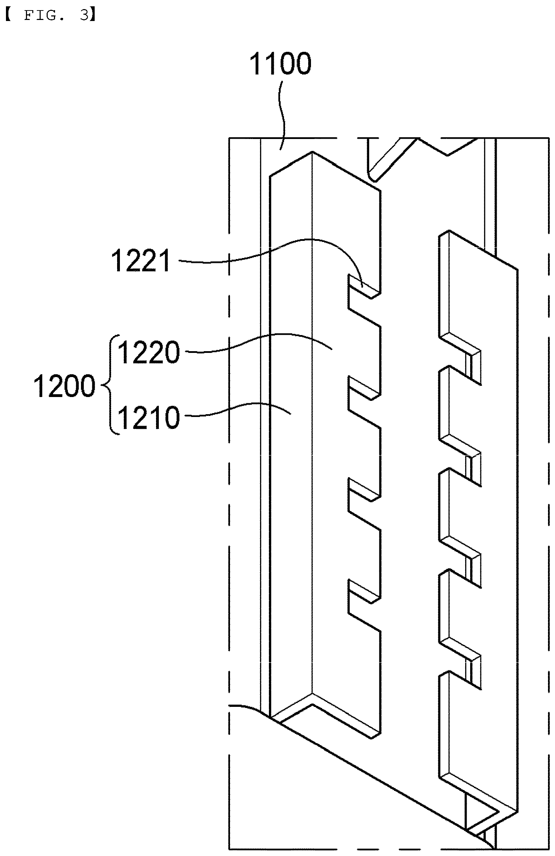

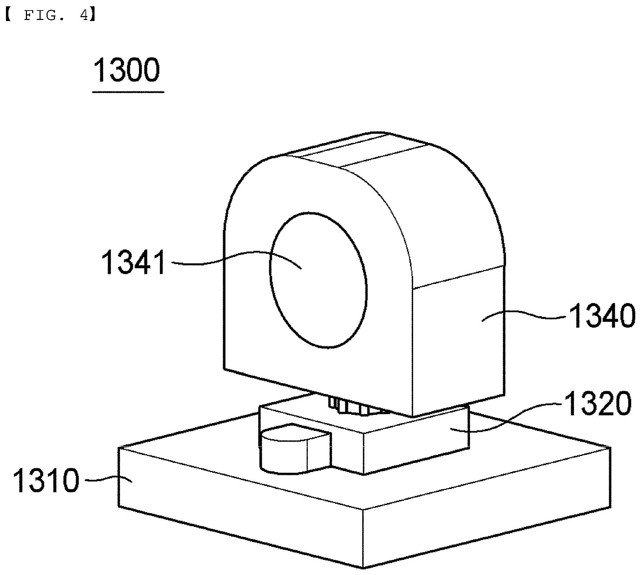

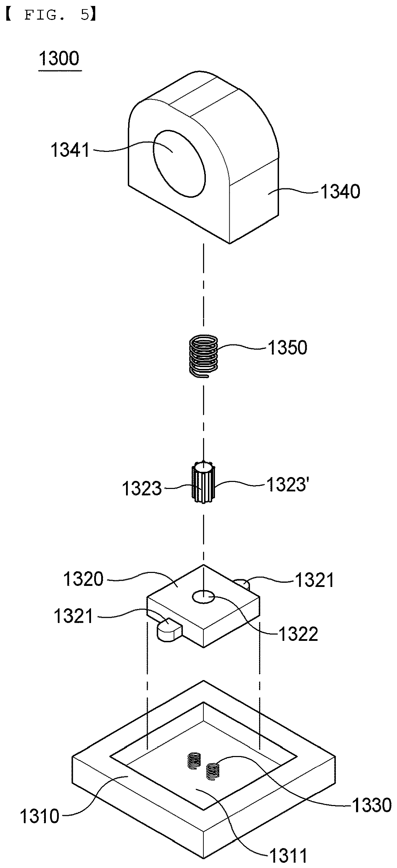

FIG. 2 is a perspective view showing a relay according to a first embodiment of the present invention, FIG. 3 is an enlarged perspective view of a guide rail according to the first embodiment of the present invention, FIG. 4 is a perspective view showing a fastening member according to the first embodiment of the present invention, and FIG. 5 is an exploded perspective view showing the fastening member according to the first embodiment of the present invention.

Referring to FIGs. 2 to 5, the relay 1000 according to the first embodiment of the present invention includes a relay housing 1100, a guide rail 1200, and a fastening member 1300.

The relay housing 1100 may define a receiving portion to receive and protect a control element configured to control a secondary battery.

As an example, the control element may include a main relay configured to reversibly automatically cut off overcurrent and high voltage, a free charge relay connected in priority to the main relay during an initial discharge process, the free charge relay being configured to reduce voltage and current that is supplied in order to prevent sudden supply of high-voltage electricity to a motor and an electric part of a vehicle, a resistor coupled or connected to the free charge relay, the resistor being configured to reduce current and voltage, a service plug located on the path of a positive electrode or negative electrode circuit, the service plug being configured to check the operating status of a battery pack and to manually cut off electricity when the battery pack needs to be repaired, and a current sensor configured to detect current in the positive electrode or negative electrode circuit and to transmit the same to a BMS.

The guide rail 1200 may be formed on an outer surface of the relay housing 1100, and may serve to guide the movement of the fastening member 1300.

The guide rail 1200 may include a vertical portion 1210 extending from the outer surface of the relay housing 1100 in a vertical direction and a horizontal portion 1220 extending from the vertical portion 1210 in a direction parallel to the outer surface of the relay housing 1100.

A pair of vertical portions 1210 may be formed so as to be spaced apart from each other, and horizontal portions 1220 may be formed so as to extend in a direction in which the horizontal portions face each other.

Each of the horizontal portions 1220 may have a plurality of first incision portions 1221 formed in an edge thereof in the direction in which the horizontal portions face each other, and the first incision portions 1221 may form a concave-convex pattern shape. In addition to the concave-convex pattern shape, a wavy shape is also possible. The concave-convex pattern shape shown in FIGs. 2 and 3 may correspond to a square wave shape, but may also be modified to a curved wave shape, a triangular wave shape, etc.

Unlike FIGs. 2 and 3, the first incision portions may form a simple straight line with no concave-convex pattern shape when viewed from outside. In this case, the horizontal portion 1220 may be provided in an inner surface thereof with non-penetrating fixing recesses corresponding to the concave-convex pattern shape.

The fastening member 1300 includes a first flat portion 1310, a second flat portion 1320, a first elastomer 1330, and a fastening portion 1340.

The first flat portion 1310 is formed in a flat shape, and is inserted into and moved in a space defined between the outer surface of the relay housing 1100 and the horizontal portion 1220 such that the fastening member 1300 can move along the guide rail 1200.

An indented recess 1311 having a predetermined depth is formed in the center of the first flat portion 1310, and the second flat portion 1320 may be located in the indented recess 1311.

The second flat portion 1320 is formed in a flat shape, and is located at an upper side of the first flat portion 1310. An indented hole 1322 having a predetermined depth is formed in the center of the second flat portion 1320, and an extension wall 1323 is formed along an upper edge of the indented hole 1322 so as to extend to a predetermined height in a vertical direction.

A first protrusion 1321 protruding by a predetermined length is formed on a side surface of the second flat portion 1320, and the first protrusion 1321 may be inserted into the first incision portion 1221 of the horizontal portion 1220 to inhibit the fastening member 1300 from moving along the guide rail 1200 due to external impact or vibration.

In this case, a second protrusion 1323' protruding by a predetermined height may be formed on an outer surface of the extension wall 1323, and the second protrusion 1323' serves to fix the fastening portion 1340 so as not to be rotated.

The first elastomer 1330 is located in the indented recess 1311 of the first flat portion 1310 to support a lower surface of the second flat portion 1320, and when the second flat portion 1320 is pushed and moved downward, the first elastomer may push the second flat portion upward to return the second flat portion to the original position thereof.

That is, when the fastening member 1300 is moved along the guide rail 1200, the second flat portion 1320 is pushed and moved downward, whereby the first protrusion 1321 of the second flat portion 1320 is separated from the first incision portion 1221. Subsequently, the first flat portion 1310 may be moved along the guide rail 1200, whereby the fastening member 1300 may be moved.

In addition, when the pressure applied to the second flat portion 1320 is released after movement to a designated position is completed, the second flat portion 1320 may be moved upward by the first elastomer 1330, and the first protrusion 1321 may be inserted into and fixed to the first incision portion 1221, whereby it is possible to fix the fastening member 1300 at the designated position.

At this time, the first elastomer 1330 is connected to at least one of a bottom surface of the indented recess 1311 and a bottom surface of the second flat portion 1320, one side of the first elastomer is connected to the bottom surface of the indented recess 1311 and the other side of the first elastomer is connected to bottom surface of the second flat portion 1320 in order to prevent the first elastomer 1330 from being dislocated and to support the second flat portion 1320.

In addition, the first elastomer 1330 may be formed in a compressed state in which the first elastomer is contracted by a predetermined length in order to maintain uniform pressure applied to the second flat portion 1320 during normal operation and to prevent the first protrusion 1321 from being separated from the first incision portion 1221.

The fastening portion 1340 is located on the second flat portion 1320 and is configured to fix the relay 1000 when mounted to a case (not shown) of the battery module/battery pack, and a fastening hole 1341, through which a fixing means such as a bolt extends, is formed in the fastening portion.

Although an upper part of the fastening portion 1340 is shown as having an arch shape in the drawings, the present invention is not limited thereto as long as the fastening portion is formed so as to have angled corners depending on the shape of the part on which the fastening portion 1340 is seated and the fastening hole 1341 is formed such that the fastening portion can be mounted and fixed.

In addition, a hole or a recess configured to receive the extension wall 1323 may be formed in a lower side of the fastening portion 1340, and the hole or the recess may be formed in a shape capable of receiving the second protrusion 1323' of the extension wall 1323.

A second elastomer 1350 may be located in the indented hole 1322 and the extension wall 1323, and may be located such that one side of the second elastomer is connected to the bottom surface of the indented hole 1322 and the other side of the second elastomer is connected to the lower side of the fastening portion 1340.

The second elastomer 1350 serves to allow the second flat portion 1320 and the fastening portion 1340 to come into tight contact with each other such that the fastening portion 1340 is fixed, and to this end, the second elastomer 1350 may be formed in a state of being relaxed by a predetermined length.

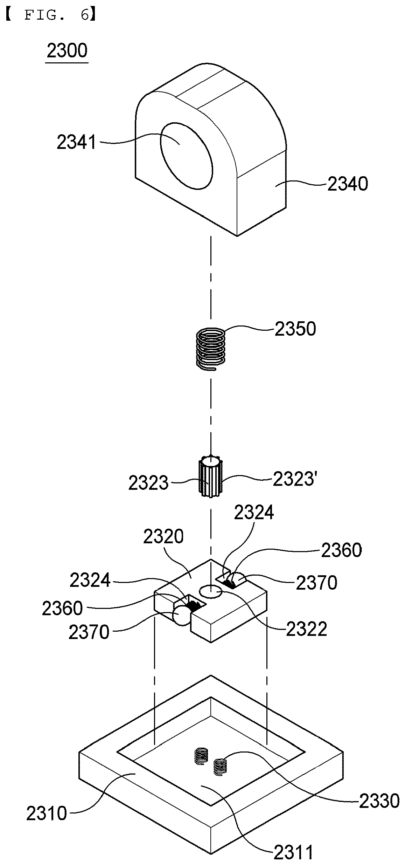

FIG. 6 is an exploded perspective view showing a fastening member according to a second embodiment of the present invention.

Referring to FIG. 6, the fastening member according to the preferred second embodiment of the present invention is identical to the fastening member according to the first embodiment described with reference to FIGs. 2 to 5, except for the configuration of a second flat portion 2320, and therefore a description of the same configuration will be omitted.

The second flat portion 2320 of the fastening member according to the second embodiment of the present invention may include a second incision portion 2324, a third elastomer 2360, and a fastener 2370.

The second incision portion 2324 may be formed in a shape partially incised inward from an edge thereof, and may be further formed in an opposing edge.

The third elastomer 2360 is located in the second incision portion 2324, and one side of the third elastomer may be connected to an inner surface of the second incision portion 2324.

The fastener 2370 may be spherical in shape, may be located near an edge opening of the second incision portion 2324, and may be connected to the other side of the third elastomer 2360.

In addition, the fastener 2370 may be located in a state of protruding from an edge of the second flat portion 2320, whereby a part of the fastener may be inserted into the first incision portion 1221 shown in FIG. 3 to fix the position of the fastening member 2300.

In this case, the third elastomer 2360 may be formed in the state in which the third elastomer is contracted by a predetermined length in order to apply a predetermined level of pressure to keep the fastener 2370 protruding from the edge of the second flat portion 2320.

The fastening member 2300 according to the second embodiment includes a third elastomer 2360 and a fastener 2370. When the fastening member 2300 is pressed, therefore, the fastener 2370 may be inserted into the second incision portion 2324, whereby it is possible to move the fastening member 2300 to a designated position.

Since the fastening member 2300 can be moved without lowering the second flat portion 2320, therefore, an indented recess 2311 and a first elastomer 2330 may be omitted as needed.

In addition, the present invention provides a battery module equipped with one or more relays having the aforementioned features.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the scope of the appended claims.

### (Description of Reference Numerals)

10: Relay housing
20: Connection member
30: Fixing portion
1000: Relay
1100: Relay housing
1200: Guide rail
1210: Vertical portion
1220: Horizontal portion
1221: First incision portion
1300, 2300: Fastening members
1310, 2310: First flat portions
1311, 2311: Indented recesses
1320, 2320: Second flat portions
1321: First protrusion
1322, 2322: Indented holes
1323, 2323: Extension walls
1323', 2323': Second protrusions
1330, 2330: First elastomers
1340, 2340: Fastening portions
1341, 2341: Fastening holes
1350, 2350: Second elastomers
2324: Second incision portion
2360: Third elastomer
2370: Fastener
1350, 2350: Second elastomers
2324: Second incision portion
2360: Third elastomer
2370: Fastener

## Claims

1. A relay comprising:
a relay housing (10) configured to receive a control element;
a guide rail (1200) formed on an outer surface of the relay housing (10); and
a fastening member (1300, 2300) configured to be movable along the guide rail (1200); **characterised in that**
the fastening member (1300, 2300) comprises:
a first flat portion (1310, 2310) configured to be moved along the guide rail (1200), the first flat portion (1310, 1320) being provided in a central part thereof with an indented recess (1311, 2311) having a predetermined depth;
a second flat portion (1320, 2320) seated in the indented recess (1311, 2311) of the first flat portion;
at least one first elastomer (1330, 2330) located between the indented recess (1311, 2311) and the second flat portion (1320, 2320); and
a fastening portion (1340, 2340) located at an upper side of the second flat portion (1320, 2320), the fastening portion (1340, 2340) having a fastening hole; wherein
one side of the first elastomer (1330, 2330) is connected to the bottom surface of the indented recess (1311, 2311) and the other side of the first elastomer (1330, 2330) is connected to the bottom surface of the second flat portion (1320, 2320).

2. The relay according to claim 1, wherein
the guide rail comprises:
a vertical portion (1210) extending from the outer surface of the relay housing (10) in a vertical direction; and
a horizontal portion (1220) extending from the vertical portion in a direction parallel to the outer surface,
wherein the horizontal portion (1220) is provided with a first incision portion (1221).

3. The relay according to claim 2, wherein:
the first incision portion has at least one of a concave-convex pattern shape, a wavy shape, and a straight shape, and
when the first incision portion has the straight shape, the horizontal portion is provided in an inner surface thereof with a non-penetrating fixing recess having a predetermined depth formed in a concave-convex pattern shape or a wavy shape.

4. The relay according to claim 1, wherein a first protrusion (1321) protruding by a predetermined length is formed on a side surface of the second flat portion (1320, 2320).

5. The relay according to claim 1, wherein a second elastomer (1350) configured to connect the fastening portion (1340, 2340) and the second flat portion (1320, 2320) to each other is located between the fastening portion (1340, 2340) and the second flat portion (1320, 2320).

6. The relay according to claim 5, further comprising a columnar extension wall (1323) configured to connect the fastening portion (1340, 2340) and the second flat portion (1320, 2320) to each other,
wherein the second elastomer (1350) is disposed outside or in the columnar extension wall (1323).

7. The relay according to claim 6, wherein at least one second protrusion (1323', 2323') is formed on an outer surface of an upper end of the columnar extension wall (1323).

8. The relay according to claim 1, wherein:
the second flat portion (1320, 2320) is provided in a center thereof with an indented hole (1322) having a predetermined depth, and
an extension wall (1323) extending by a predetermined height is formed along an edge of the indented hole (1322).

9. The relay according to claim 1, wherein the second flat portion (1320, 2320) is provided with a second incision portion (2324) partially incised inward from an edge thereof, and
wherein the relay further comprises:
a third elastomer located in the second incision portion (2324), and
a fastener (2370) connected to the third elastomer and located adjacent to an edge of the second incision portion.

10. A battery module comprising the relay according to any one of claims 1 to 9.

## Patentansprüche

1. Relais, umfassend:
ein Relais-Gehäuse (10), welches dazu eingerichtet ist, ein Steuerelement aufzunehmen;
eine Führungsschiene (1200), welche an einer äußeren Fläche des Relais-Gehäuses (10) gebildet ist; und
ein Befestigungselement (1300, 2300), welches dazu eingerichtet ist, entlang der Führungsschiene (1200) bewegbar zu sein;
**dadurch gekennzeichnet, dass**
das Befestigungselement (1300, 2300) umfasst:
einen ersten ebenen Abschnitt (1310, 2310), welcher dazu eingerichtet ist, entlang der Führungsschiene (1200) bewegt zu werden, wobei der erste ebene Abschnitt (1310, 1320) in einem zentralen Teil davon mit einer vertieften Ausnehmung (1311, 2311) bereitgestellt ist, welche eine vorbestimmte Tiefe aufweist;
einen zweiten ebenen Abschnitt (1320, 2320), welcher in der vertieften Ausnehmung (1311, 2311) des ersten ebenen Abschnitts sitzt;
wenigstens ein erstes Elastomer (1330, 2330), welches zwischen der vertieften Ausnehmung (1311, 2311) und dem zweiten ebenen Abschnitt (1320, 2320) angeordnet ist; und
einen Befestigungsabschnitt (1340, 2340), welcher an einer oberen Seite des zweiten ebenen Abschnitts (1320, 2320) angeordnet ist, wobei der Befestigungsabschnitt (1340, 2340) ein Befestigungsloch aufweist; wobei eine Seite des ersten Elastomers (1330, 2330) mit der unteren Fläche der vertieften Ausnehmung (1311, 2311) verbunden ist und die andere Seite des ersten Elastomers (1330, 2330) mit der unteren Fläche des zweiten ebenen Abschnitts (1320, 2320) verbunden ist.

2. Relais nach Anspruch 1, wobei
die Führungsschiene umfasst:
einen vertikalen Abschnitt (1210), welcher sich von der äußeren Fläche des Relais-Gehäuses (10) in einer vertikalen Richtung erstreckt; und
einen horizontalen Abschnitt (1220), welcher sich von dem vertikalen Abschnitt in einer Richtung parallel zu der äußeren Fläche erstreckt,
wobei der horizontale Abschnitt (1220) mit einem ersten Einschnittsabschnitt (1221) bereitgestellt ist.

3. Relais nach Anspruch 2, wobei:
der erste Einschnittsabschnitt wenigstens eines aufweist aus einer konkav-konvexen Musterform, einer gewellten Form und einer geraden Form, und wenn der erste Einschnittsabschnitt die gerade Form aufweist, der horizontale Abschnitt in einer inneren Fläche davon mit einer nichtdurchgehenden Fixierungsausnehmung bereitgestellt ist, welche eine vorbestimmte Tiefe aufweist, welche in einer konkav-konvexen Musterform oder einer gewellten Form gebildet ist.

4. Relais nach Anspruch 1, wobei ein erster Vorsprung (1321), welcher um eine vorbestimmte Länge vorsteht, an einer Seitenfläche des zweiten ebenen Abschnitts (1320, 2320) gebildet ist.

5. Relais nach Anspruch 1, wobei ein zweites Elastomer (1350), welches dazu eingerichtet ist, den Befestigungsabschnitt (1340, 2340) und den zweiten ebenen Abschnitt (1320, 2320) miteinander zu verbinden, zwischen dem Befestigungsabschnitt (1340, 2340) und dem zweiten ebenen Abschnitt (1320, 2320) angeordnet ist.

6. Relais nach Anspruch 5, ferner umfassend eine säulenförmige Erstreckungswand (1323), welche dazu eingerichtet ist, den Befestigungsabschnitt (1340, 2340) und den zweiten ebenen Abschnitt (1320, 2320) miteinander zu verbinden,
wobei das zweite Elastomer (1350) außerhalb oder in der säulenförmigen Erstreckungswand (1323) angeordnet ist.

7. Relais nach Anspruch 6, wobei wenigstens ein zweiter Vorsprung (1323', 2323') an einer äußeren Fläche eines oberen Endes der säulenförmigen Erstreckungswand (1323) gebildet ist.

8. Relais nach Anspruch 1, wobei:
der zweite ebene Abschnitt (1320, 2320) in einem Zentrum davon mit einem vertieften Loch (1322) bereitgestellt ist, welches eine vorbestimmte Tiefe aufweist, und
eine Erstreckungswand (1323), welche sich um eine vorbestimmte Höhe erstreckt, entlang eines Rands des vertieften Lochs (1322) gebildet ist.

9. Relais nach Anspruch 1, wobei der zweite ebene Abschnitt (1320, 2320) mit einem zweiten Einschnittsabschnitt (2324) bereitgestellt ist, welcher teilweise nach innen von einem Rand davon eingeschnitten ist, und
wobei das Relais ferner umfasst:
ein drittes Elastomer, welches in dem zweiten Einschnittsabschnitt (2324) angeordnet ist, und
ein Befestigungselement (2370), welches mit dem dritten Elastomer verbunden und benachbart zu einem Rand des zweiten Einschnittsabschnitts angeordnet ist.

10. Batteriemodul, umfassend das Relais nach einem der Ansprüche 1 bis 9.

## Revendications

1. Relais comprenant :
un boîtier de relais (10) configuré pour recevoir un élément de commande ;
un rail de guidage (1200) formé sur une surface externe du boîtier de relais (10) ; et
un organe de fixation (1300, 2300) configuré pour être mobile le long du rail de guidage (1200) ; **caractérisé en ce que** l'organe de fixation (1300, 2300) comprend :
une première partie plate (1310, 2310) configurée pour être déplacée le long du rail de guidage (1200), la première partie plate (1310, 1320) étant pourvue dans une partie centrale de celle-ci d'un évidement creux (1311, 2311) présentant une profondeur prédéterminée ;
une seconde partie plate (1320, 2320)placée dans l'évidement creux (1311, 2311) de la première partie plate ;
au moins un premier élastomère (1330, 2330) situé entre l'évidement creux (1311, 2311) et la seconde partie plate (1320, 2320); et
une partie de fixation (1340, 2340) située au niveau d'un côté supérieur de la seconde partie plate (1320, 2320), la partie de fixation (1340, 2340) présentant un trou de fixation ; dans lequel
un côté du premier élastomère (1330, 2330) est relié à la surface inférieure de l'évidement creux (1311, 2311) et l'autre côté du premier élastomère (1330, 2330) est relié à la surface inférieure de la seconde partie plate (1320, 2320).

2. Relais selon la revendication 1, dans lequel le rail de guidage comprend :
une partie verticale (1210) s'étendant à partir de la surface externe du boîtier de relais (10) dans une direction verticale ; et
une partie horizontale (1220) s'étendant à partir de la partie verticale dans une direction parallèle à la surface externe,
dans lequel la partie horizontale (1220) est pourvue d'une première partie d'incision (1221).

3. Relais selon la revendication 2, dans lequel :
la première partie d'incision présente au moins l'une parmi une forme de motif concave-convexe, une forme ondulée et une forme droite, et
lorsque la première partie d'incision présente la forme droite, la partie horizontale est pourvue dans une surface interne de celle-ci d'un évidement de fixation non pénétrant présentant une profondeur prédéterminée formée en une forme de motif concave-convexe ou une forme ondulée.

4. Relais selon la revendication 1, dans lequel une première saillie (1321) faisant saillie d'une longueur prédéterminée est formée sur une surface latérale de la seconde partie plate (1320, 2320).

5. Relais selon la revendication 1, dans lequel un deuxième élastomère (1350) configuré pour relier la partie de fixation (1340, 2340) et la seconde partie plate (1320, 2320) l'une à l'autre est situé entre la partie de fixation (1340, 2340) et la seconde partie plate (1320, 2320).

6. Relais selon la revendication 5, comprenant en outre une paroi d'extension (1323) colonnaire configurée pour relier la partie de fixation (1340, 2340) et la seconde partie plate (1320, 2320) entre elles,
dans lequel le deuxième élastomère (1350) est disposé à l'extérieur ou dans la paroi d'extension (1323) colonnaire.

7. Relais selon la revendication 6, dans lequel au moins une seconde saillie (1323', 2323') est formée sur une surface externe d'une extrémité supérieure de la paroi d'extension (1323) colonnaire.

8. Relais selon la revendication 1, dans lequel :
la seconde partie plate (1320, 2320) est pourvue au centre de celle-ci d'un trou creux (1322) présentant une profondeur prédéterminée, et
une paroi d'extension (1323) s'étendant d'une hauteur prédéterminée est formée le long d'un bord du trou creux (1322).

9. Relais selon la revendication 1, dans lequel la seconde partie plate (1320, 2320) est pourvue d'une seconde partie d'incision (2324) partiellement incisée vers l'intérieur à partir d'un bord de celle-ci, et
dans lequel le relais comprend en outre :
un troisième élastomère situé dans la seconde partie d'incision (2324), et
une fixation (2370) reliée au troisième élastomère et située adjacente à un bord de la seconde partie d'incision.

10. Module de batterie, comprenant le relais selon l'une quelconque des revendications 1 à 9.
